(19) **Europäisches Patentamt**

**European Patent Office**

**Office européen des brevets**

(11) **EP 0 795 579 B1**

(12) **EUROPÄISCHE PATENTSCHRIFT**

(45) Veröffentlichungstag und Bekanntmachung des Hinweises auf die Patenterteilung:
**11.04.2001 Patentblatt 2001/15**

(51) Int Cl.[7]: **C08K 9/06**, C08L 21/00, C09C 3/12

(21) Anmeldenummer: **97102292.6**

(22) Anmeldetag: **13.02.1997**

(54) **Staubarme, gut dispergierbare Granulate auf der Basis von mit Organosiliciumverbindungen modifizierten silikatischen Füllstoffen**

Dust-free, well dispersible granulates based on organosilicon modified siliceous fillers

Granulés exempts de poussière et facilement dispersables à base de charges de silicates modifiés par des composés d'organosilicium

(84) Benannte Vertragsstaaten:
**DE FR GB IT LU**

(30) Priorität: **12.03.1996 DE 19609619**

(43) Veröffentlichungstag der Anmeldung:
**17.09.1997 Patentblatt 1997/38**

(73) Patentinhaber: **Degussa-Hüls Aktiengesellschaft 60287 Frankfurt am Main (DE)**

(72) Erfinder:
• **Barthel, Thomas 63457 Hanau (DE)**
• **Görl, Udo, Dr. 53332 Bornheim (DE)**
• **Parkhouse, Alan 50389 Wesseling (DE)**
• **Eichenauer, Kurt 63628 Bad Soden-Salmünster (DE)**

(56) Entgegenhaltungen:
**EP-A- 0 177 674          EP-A- 0 442 143**

**Beschreibung**

Die Erfindung betrifft staubarme, gut dispergierbare Granulate auf der Basis von mit Organosiliciumverbindungen modifizierten silikatischen Füllstoffen, ihre Herstellung und Verwendung.

Es ist bekannt, oxidische Oberflächen mit Organosiliciumverbindungen zu behandeln, um durch diese Vorbehandlung den Verbund zwischen oxidischem Füllstoff und organischen Polieren unterschiedlichster chemischer Zusammensetzung und damit die verstärkenden Eigenschaften der Füllstoffe in den Polymeren zu verbessern. Zu diesem Zweck kann man z. B. die betreffende Organosiliciumverbindung in einem organischen Lösungsmittel auflösen und mit dieser Lösung anschließend z. B. Clays behandeln (US-PS 3,227,675 HUBER). Aus der US-PS 3,567,680 ist bekannt, in Wasser supendierte Kaoline mit Mercapto- und Aminosilanen zu modifizieren. Die betreffenden Organosiliciumverbindungen sind jedoch in den für die Modifizierung nötigen Mengen wasserlöslich, so daß auch in diesem Fall die Behandlung des Füllstoffes aus einer Lösung heraus erfolgt.

Die US-PS 4,151,154 betrifft oxidische silikatische Füllstoffe, deren Oberfläche einer Behandlung mit zwei Typen von Organosiliciumverbindungen ausgesetzt wird. Die oxidischen Teilchen werden dabei so behandelt, daß sie eine größere Affinität zu Wasser zeigen und sich auch leichter in wässrigen Systemen verteilen lassen.

Aus der US-PS 4,076,550 ist die Verwendung von schwefelhaltigen Organosiliciumverbindungen in vulkanisierbaren Kautschukmischungen bekannt. Man kann diese Verbindung auch in Abmischungen mit Kieselsäure einsetzen, die aber nicht thermisch vorbehandelt werden und nur über eine begrenzte Lagerstabilität verfügen. In der EP-PS 0126 871 wird ein Verfahren beschrieben, bei dem man die Oberfläche silikatischer Füllstoffe mit Hilfe einer wässrigen Emulsion von wasserunlöslichen Organosiliciumverbindungen modifiziert.
Die US-PS 4,141,751 betrifft ein Verfahren, das gänzlich ohne Lösungsmittel auskommt, aber für bestimmte Organosiliciumverbindungen nicht praktikabel ist, wie die Praxis zeigt.

In der EP 0442 143 B1 wird ein Verfahren beschrieben, in dem das Silan ohne Lösungsmittel und Wasser in einem zweistufigen Herstellungsprozeß zunächst bei Raumtemperatur in einem Hochleistungsmischer mit dem Füllstoff homogenisiert und anschließend bei erhöhter Temperatur zur Reaktion gebracht wird.

Gemäß diesem Patent hergestellte Produkte sind als Coupsil® seit ca. drei Jahren im Handel. Da sie in Pulverform anfallen, müssen sie anschließend in einem zusätzlichen Granulationsprozeß in die gewünschte staubarme Form überführt werden. Wird dieser nach dem Stand der Technik durchgeführt, ist mit einer schlechteren Dispergierbarkeit zu rechnen.

Ein weiteres Patent, das die Modifizierung von silikatischen Füllstoffen mit Organosilanen beschreibt, ist EP 0177 674 B1. Hier wird die Kieselsäure in Wasser suspendiert, mit einer wässrigen Silanemulsion unter Zusatz von Emulgatoren vermischt und anschließend bei erhöhter Temperatur getrocknet. Auch in diesem Fall muß zur Herstellung eines staubarmen Produktes ein zusätzlicher Granulationsprozeß nachgeschaltet werden, der wie bekannt, die Dispergierbarkeit des modifizierten Materials verschlechtert.

Produkte, die gemäß den Patenten EP 0442 143 und EP 0177 674 erhalten werden, sind dadurch gekennzeichnet, daß auch nach Reaktion der Alkoxysilylgruppe(en) des Organosilans mit den Silanolgruppen an der Oberfläche der eingesetzten silikatischen Füllstoffe, die unter Abspaltung eines Alkohols verläuft, ein Teil der Alkoxygruppen nicht umgesetzt auf der Oberfläche zurückbleibt.
Diese reagieren jedoch im Laufe der Lagerung der nach dem Stand der Technik gewonnenen Produkte unter Alkoholabspaltung in unerwünschter Weise ab. Auch während der Verarbeitung bei der Herstellung von Gummiartikeln, z. B. während der Extrusion kann die Alkoholabspaltung zur Porenbildung und damit zur Beeinträchtigung der gummitechnischen Eigenschaften der Vulkanisate führen.
Des weiteren entsteht während des gesamten Herstellprozesses des Gummiartikels, beginnend vom Mischprozeß über die Weiterverarbeitung der Mischung bis hin zur Vulkanisation des Produktes, Alkohol, der in die Raumluft abgegeben wird, was den heutigen Ansprüchen der Arbeitsplatzhygiene nicht mehr gerecht wird.

Aufgabe der Erfindung ist eine Verfahren zur Herstellung von staubarmen, gut dispergierbaren Granulaten auf der Basis von mit Organosiliciumverbindungen modifizierten gefällten silikatischen Füllstoffen.
Die eingesetzen Organosiliciumverbindungen sollen weitgehend mit den OH-Gruppen an der Oberfläche der Füllstoffe abreagiert haben.
Gegenstand der Erfindung sind staubarme, gut dispergierbare Granulate auf der Basis von mit Organosiliziumverbindungen der allgemeinen Formel

$$[R^1{}_n(R\text{-}(CH_2)_iO)_{3-n}Si\text{-}(CH_2)_y\text{-}(CH_2)_z]_q\ [B] \qquad\qquad (I)$$

in der bedeuten:

| B: | -SCN,-SH, -Cl, -NH$_2$ (wenn q = 1) oder -S$_x$- (wenn q = 2), wobei die schwefelhaltigen Silane bevorzugt werden |
|---|---|
| R und R$^1$: | eine Alkylgruppe mit 1 bis 4 Kohlenstoffatomen, wobei alle Reste R und R$^1$ jeweils die gleiche oder eine verschiedene Bedeutung haben können, |
| R: | zusätzlich H, |
| n: | 0; 1 oder 2, |
| y: | 0 bis 19, insbesondere 0 bis 4, |
| z: | 1, |
| 1: | 1, |
| x: | eine Zahl von 2 bis 8, |

modifizierten silikatischen durch Fällung hergestellten Füllstoffen, wobei der Grad der Umsetzung der Alkoxygruppen in Form des Integrationsverhältnisses der mittels $^{13}$C-NMR-Spektroskopie erhaltenen Signale angegeben wird und sich folgende Werte ergeben:

$$R \neq H: \frac{(CH_2)_i}{(CH_2)_z} \leq 0{,}4 \text{ für q = 2}, \leq 0{,}15 \text{ für q = 1}$$

$$R = H: \frac{R\text{-}(CH_2)_i}{(CH_2)_z} \leq 0{,}4 \text{ für q = 2}, \leq 0{,}15 \text{ für q =1}$$

Je kleiner das Verhältnis ist, desto weniger sind noch nicht abreagierte Alkoxygruppen vorhanden. Erfindungsgemäß erreicht man auch den Wert von praktisch gleich Null (s. Beispiel 4).Der Wert von ≤ 0,4 für Verbindungen mit q = 2 wird bei den nach dem Stand der Technik bekannten Einsatzformen immer überschritten.
Zu nennen wäre hier die direkte Zugabe beider Komponenten (Füllstoff, Silan) zur Gummimischung (in situ-Verfahren), sowie die gemäß EP 0442 143 B1 und EP 0177 674 B1 erhaltenen Produkte.
Das gilt ebenso für Verbindungen mit q = 1, bei denen erfindungsgemäß ein Wert ≤ 0,15, bevorzugt ≤ 0,1 gefunden wird.
Ein weiterer Gegenstand der Erfindung sind Granulate,die dadurch gekennzeichnet sind, daß sie als Basis gefällte Kieselsäure enthalten, und das Granulat nach der Modifizierung eine spez. Oberfläche (N$_2$,•BET)von 35 bis 400 m$^2$/g, insbesondere 100 bis 250 m$^2$/g, eine CTAB-Oberfläche von 35 bis 350 m$^2$/g, insbesondere von 100 bis 250 m$^2$/g sowie eine DBP-Zahl von 100 bis 300 ml/100 g, insbesondere von 150 bis 250 ml/100 g besitzt.
Vorzugsweise handelt es sich um ein fließfähigeres Granulat als aus dem Stand der Technik bekannt ist, das aus weitgehend kugelförmigen Teilchen besteht. Die Schüttdichte liegt im Bereich von 180 bis 280 g/l, bevorzugt von 210 bis 230 g/l.
Die beanspruchten Granulate werden nach einem Verfahren hergestellt, das ebenfalls ein Gegenstand der Erfindung ist. Die Grundlagen der Wirbelschicht-Sprühgranulation sind eigentlich Bestandteil des Standes der Technik (Chem. Ing.Techn.62 (1990) 822 bis 834).
Neu ist jedoch die Anwendung im Bereich gefällter Füllstoffe und insbesondere eine während der Granulation stattfindende Umsetzung einer Organosiliciumverbindung mit dem zu granulierenden Füllstoff.
Das Verfahren zur Herstellung der erfindungsgemäßen Granulate ist dadurch gekennzeichnet, daß es folgende Schritte umfaßt:

a) Herstellen einer wäßrigen Suspension des silikatischen Füllstoffs mit einem pH-Wert von 1 bis 5,
b) Einsprühen oder Eindüsen dieser Suspension und einer oder mehrere der Verbindungen gemäß Formel (I) in eine mit Heißluft erzeugte Wirbelschicht,
c) Abziehen des entstehenden, mit Organosilanverbindungen modifizierten Feuchtgranulats der gewünschten Korngröße,
d) Trocknen des Granulats, gegebenenfalls in verschiedenen Temperaturstufen,
e) gegebenenfalls Abscheiden der Feinanteile und deren Rückführen in die Wirbelschicht,
f) Anpassen des pH-Werts des Granulats auf einen Bereich von 5,5 bis 8,5, bevorzugt 6 bis 7,5.

Gegebenenfalls schließt sich ein Siebschritt an.
Silikatische Füllstoffe, die in der Gummiindustrie Anwendung finden, werden im allgemeinen durch Fällprozesse gewonnen. Ausgangsmaterial sind Alkalisikatlösungen, vorzugsweise Natronwasserglas, aus denen z. B. durch Zusatz von Säure amorphe Kieselsäuren ausgefällt werden. Metallsilikate, wie Calciumsilikat und Aluminiumsilikat erhält man, wenn man die bei der Fällung verwendete Säure ganz oder teilweise durch Metallsalze ersetzt, die mit Wassserglas schwerlösliche Niederschläge bildet.
Die bei der Fällung erhaltenen Suspensionen werden in Filterpressen überführt, in denen die bei der Umsetzung entstandenen Salze weitestgehend ausgewaschen werden. Der dabei anfallende Filterkuchen wird bevorzugt in dem erfindungsgemäßen Verfahren für den Schritt a)eingesetzt: Herstellen einer wässrigen Suspension des silikatischen Füllstoffs mit einem Feststoffgehalt von 17 bis 24 %, indem man den nach dem Fällprozeß und anschließendem Filtrierschritt erhaltenen Filterkuchen vorzugsweise unter Zugabe von 15 bis 30 %iger Schwefelsäure und Einsatz von Scherenergie verflüssigt, wobei der pH-Wert der Suspension von 1 bis 5 reicht.

Die Schwefelsäure wird dabei in einer Menge eingesetzt, die ausreicht, um eine pump- und sprühfähige Suspension zu erhalten.

Die Organosiliciumverbindung kann alternativ in die Suspension eingemischt werden, so daß eine Feststoff/Silan-Suspension über eine Mehrstoffdüse in die Wirbelschicht eingespeist wird. Es ist aber ebenso möglich, die Feststoffsuspension und die Organosiliciumverbindung über getrennte Düsen, jedoch gleichzeitig, in das Wirbelbett einzudosieren.

Die Menge dieser Verbindung beläuft sich im allgemeinen auf >0 bis 25 Gew-%, vorteilhaft 5 bis 12 Gew.-%. Dabei sind die maximal einzusetzenden Silankonzentrationen proportional zur spez. Oberfläche der eingesetzten silikatischen Füllstoffe, insbesondere der Kieselsäuren, sinnvoll.

Der Massenzuwachs in der Wirbelschicht wird im stationären Betrieb durch einen kontinuierlichen Granulatabzug kompensiert, wobei durch gezielte Fahrweise der Abzugsluft über das Abzugsrohr Granulat ab einer gewünschten Korngröße ausgetragen wird. Der mit Trocknungsluft aus der Trocknungskammer ausgetragene Feinstaub wird abgeschieden und als Feststoffkeime dem Granulationsprozeß wieder zugeführt. Im Fall der Herstellung der erfindungsgemäßen Aufbaugranulate aus Kieselsäurefüllstoff und Organosilan beträgt die Temperatur in der Wirbelschicht im allgemeinen 40 bis 55 °C bei Zulufttemperaturen von 150 bis 600 °C, vorzugsweise 250 bis 400 °C. Das aus dem Granulationsprozeß ausgetragene Feuchtgranulat wird in einem Fließbett-Trockner bei im allgemeinen 30 bis 55 °C auf die gewünschte Endproduktfeuchte nachgetrocknet und gegebenenfalls bis zu einer maximalen Produkttemperatur von ca. 150 ° C getempert. Anschließend erfolgt in der Regel eine Nachneutralisation, z. B. mittels Ammoniak, auf einen praxisrelevanten pH-Wert vorzugsweise um den Neutralpunkt von 7.

Durch die Kühlgrenztemperaturen an den Partikeloberflächen wird während der Granulation in der Wirbelschicht das Silan trotz der hohen Zulufttemperaturen nicht geschädigt. Die Temperatur in der Wirbelschicht und damit der Wassergehalt des ausgetragenen Feuchtgranulates bestimmen wesentlich die erreichbaren Partikelgrößen. Granulate mit einem möglichst engen Kornspektrum zwischen 125 und 600 μ entstehen erfindungsgemäß ohne zusätzliche Bindemittel, bevorzugt bei einem Wassergehalt des Feuchtgranulats von 55 bis 70 Gew.-%, insbesondere 63 bis 67 Gew.-%.

Das aus dem Granulationsprozeß ausgetragene Feuchtgranulat wird in einem Fließbett-Trockner auf die gewünschte Endproduktfeuchte nachgetrocknet und gegebenenfalls getempert. Der Trockner ist bezüglich der Luftmengen (-geschwindigkeiten) so auszulegen, daß einerseits keine Granulatzerstörung erfolgt, andererseits Feinstaub ab einer gewünschten unteren Korngröße ausgetragen wird.

Ein weiterer Gegenstand der Erfindung ist die Verwendung dieser erfindungsgemäßen Reaktionsprodukte, zwischen Kieselsäure und Organosilan in vulkanisierbaren Kautschukmischungen, dadurch gekennzeichnet, daß diese Mischungen 5 bis 150 Teile, insbesondere 15 bis 80 Teile der Produkte, bezogen auf 100 Teile Kautschuk, enthalten. Die erfindungsgemäßen Reaktionsprodukte werden in der in der Gummiindustrie üblichen Art und Weise entweder auf einem Kneter oder auf der Walze der Gummimischung zugefügt.

Ruß kann in diesen Mischungen zusätzlich vorhanden sein in einer Menge von >0 bis 100 Teilen, bezogen auf 100 Teile Kautschuk.

Dabei sollte die Gesamtmenge der Füllstoffe nicht 200 Teile übersteigen.

Die erfindungsgemäßen Produkte können dabei in allen mit Beschleuniger/Schwefel, aber auch peroxidisch vernetzbaren Kautschukarten, wie in DIN/ISO 1629 aufgelistet, eingestzt werden. Zu nennen wären hierbei Elastomere, natürliche und synthetische, ölgestreckt oder nicht, als Einzelpolymer oder Verschnitt (Blend) mit anderen Kautschuken, wie z. B. Naturkautschuke, Butadienkautschuke, Isoprenkautschuke, Butadien-Styrol-Kautschuke, insbesondere SBR, hergestellt mittels des Lösungspolymerisationsverfahrens, Butadien-Acrylnitrilkautschuke, Butylkautschuke, Terpolymere aus Ethylen, Propylen nicht konjugierte Diene. Ferner kommen für Kautschukgemische mit den genannten Kautschuken die folgenden zusätzlichen Kautschuke in Frage: Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Ethylen-Propylen-Copolymere, gegebenenfalls auch chemische Derivate des Naturkautschuks sowie modifizierte Naturkautschuke.

Ebenso bekannt sind die üblichen weiteren Bestandteile, wie natürliche Füllstoffe, Weichmacher, Stabilisatoren, Aktivatoren, Pigmente, Alterungsschutzmittel und Verarbeitungshilfsmittel in den üblichen Dosierungen.

Die erfindungsgemäßen Produkte finden Einsatz in allen Gummianwendungen, wie z. B. Reifen, Fördergurten, Dichtungen, Keilriemen, Schläuchen, Schuhsohlen etc. und zeichnen sich dort durch ein besonders gutes gummitechnisches Wertebild aus, was sich insbesondere im Modul, Abriebwiderstand und Verlustwinkel tanδ (60 °C ($\triangleq$Rollwiderstand)bemerkbar macht.

Gegenstand der Erfindung sind die unter Verwendung der erfindungsgemäßen Produkte hergestellten Kautschukmischungen und Vulkanisate.

Das erfindungsgemäß hergestellte Granulat weist eine ungewöhnlich große Anzahl von Eigenschaften auf, die aus dem Stand der Technik bekannte Produkte nicht besitzen.

- Die Umsetzung zwischen Organosiliciumverbindung und silikatischer Oberfläche verläuft so vollständig, daß kaum freie Alkoxygruppen mehr nachweisbar sind. Dies führt zu einer hohen Lagerstabilität und zu einer verbesserten Einarbeitbarkeit in Kautschukmischungen.

- Die Granulate weisen einen geringen Staubanteil auf. Er liegt mit 0,5 bis 5 Gew.-% einer Teilchengröße von <200 mesh (74 µm) deutlich unter dem bekannter nicht modifizierter Kieselsäure-Granulate (VN3/VN2-Granulat).

- Die Granulate sind rieselfähig und ermöglichen aufgrund ihrer Festigkeit den Transport, z. B. über Becherwerke, Vibrationsrinnen etc., ebenso wie eine leichte Dosierbarkeit.

- Die hohe Schüttdichte (180 bis 280 g/l) ermöglicht ein kostengünstiges Abpacken.

- Die Granulate weisen neben der für Transport und Dosierung notwendigen Festigkeit gleichzeitig die für eine gute Einarbeitbarkeit in Kautschukmischungen notwendige leichte Dispergierbarkeit auf.

- Die Granulate sind im allgemeinen nicht strukturgeschädigt und weisen trotz Granulierprozeß keinen wesentlichen Abbau der DBP-Zahl auf.

In den Beispielen verwendete Prüfnormen:

|                       | Einheit | Norm |
|-----------------------|---------|------|
| Zugfestigkeit         | MPa     | DIN 53 504 |
| Modul 300 %           | MPa     | DIN 53 504 |
| Weiterreißwiderstand  | N/mm    | DIN 53 507 |
| Shore-A-Härte         |         | DIN 53 505 |
| DIN-Abrieb            | $mm^3$  | DIN 53 516 |
| MTS                   | -       | DIN 53 513 |
| Ball Rebound          | %       | Firestone-Vorschrift |
| Bruchdehnung          | %       | DIN 53 504 |

In den Anwendungsbeispielen werden folgende Chemikalien verwendet:

| | |
|---|---|
| Si 69 | Bis(triethoxysilylpropyl)tetrasulfan (Degussa AG) |
| Buna VSL 5025 1 HM | Styrolbutadienkautschuk auf Basis Lösungsmittelpolymerisation (Bayer AG) |
| Buna CB 11S | Polybutadienkautschuk (Bayer AG) |
| Naftolen ZD | aromatischer Weichmacher (Chemetal) |
| Vulkanox 4020 | verfärbendes Alterungsschutzmittel auf Basis (Bayer AG) |
| Protector G 35 | Ozonschutzwachs (Fuller) |
| Vulkacit D | Diphenylguanidin (Bayer AG) |
| Vulkacit CZ | Benzothiazyl-2-cyclohexylsulfenamid (Bayer AG) |
| Ultrasil 3370 GR | gefällte Kieselsäure mit einer BET-Oberfläche von 175 $m^2$/g (Degussa AG) |
| Modifiziertes Produkt gemäß EP 0 442 143 B1 | Coupsil VP 7108, Entwicklungsprodukt, hergestellt aus Ultrasil 3370 und Si 69 (7,4 %) Degussa AG) |
| Modifiziertes Produkt gemäß EP 0 177 674 B1 | Entwicklungsprodukt, hergestellt aus Ultrasil 3370 und Si 69 (7,4 %) (Degussa AG) |
| VTM3 /VTM4 | erfindungsgemäßes Umsetzungsprodukt, hergestellt aus Ultrasil 3370 Filterkuchen und Si 69 (7,4 %) (Degussa AG) |

A) **Kontinuierliches Verfahren für die Herstellung von VTM4**

In einem geeigneten Mischbehälter werden 120 kg Ultrasil BV 3370-Filterkuchen (78 % $H_2O$ zu 22 % Feststoff) durch Zusatz von 0,15 kg $H_2SO_4$ (25 %) unter starkem Rühren bei Raumtemperatur verflüssigt. 2,112 kg Si 69 werden zugegeben und der Tankinhalt unter Rühren bei Raumtemperatur homogenisiert. Die Gesamtmischzeit dauert nicht länger als 30 Minuten. In einem anderen Mischbehälter wird o.g. Vorgang identisch wiederholt, so daß eine Charge des sauren verflüssigten Filterkuchen/Si 69-Gemisches immer zur Verfügung steht. Das saure verflüssigte Filterkuchen/Si 69-Gemisch wird in einen bei ca. 40 °C aufgeheizten Sprühgranulator kontinuierlich eingedüst. In der Sprühgranulator-Wirbelschicht bilden sich feste Granulatpartikel mit einem Wassergehalt von ca. 63 %, die kontinuierlich zu einem Fließbett-Trockner mit einer Zulufttemperatur von einem Fließbett-Trockner mit einer Zulufttemperatur von bis zu 300°C weitergeleitet werden.
Im Fließbett-Trockner wird bis zu einer maximalen Produkttemperatur von ca. 140 °C das aus der Sprühgranulator-Wirbelschicht ausgetragene Granulat heruntergetrocknet bis zu einem Wassergehalt von 0 bis.5 %. Gleichzeitig wird das Granulat mittels Ammoniak auf einen pH-Wert zwischen 5,5 und 8,5 eingestellt.

Nach dem Fließbett-Trockner wird das Produkt VTM4 (ca. 74 kg/h) in das Endproduktsilo weitergeleitet.

| Analyse | | VTM 4 | Ultrasil 3370 Gr. |
|---|---|---|---|
| Schwefelbestimmung [%] n. Wickbold DIN 53 584 | | 1,74 | - |
| $N_2$-Oberfläche [$m^2$/g] ISO 5794/1D | | 148 | 175 |
| CTAB [$m^2$/g] | | 155 | 165 |
| DBP [ml/100g] | | 170 | 200 |

B) **Untersuchung von mit Silan modifizierten Produkten mittels $^{13}$C-NMR-Fest-körper-Spektroskopie-Ermittlung des Reaktionsgrades**

| Spektrometer: | Bruker AM 250 Festkörper-Zusatz für 7 mm Rotoren |
|---|---|
| Meßfrequenz: | 62,9Mhz |
| Spinnerfrequenz: | ca. 4 Khz |
| Relaxationsdelay: | 3s |
| 90°-Puls H-1: | 7,6 µs |
| Kontaktzeit: | 3,25 ms |

Dieses Beispiel zeigt das unten angegebene Spektrum für das Umsetzungsprodukt von Ultrasil 3370 GR mit Si 69 (7,4 %).

$^{13}$C-NMR-Spektrum einer Si 69-modifizierten Kieselsäure

Die Identifizierung der Signale stellt sich wie folgt dar:

| Signal | C-Atome | ppm |
|--------|---------|-----|
| I | $Si - \overset{\bullet}{C}H_2 - CH_2 - CH_2 - S_4$ | 10,4 |
| II | $Si - OCH_2 - \overset{\bullet}{C}H_3$ | 16,1 |
| III | $Si - CH_2 - \overset{\bullet}{C}H_2 - CH_2 - S_4$ | 21,2 |
| IV | $Si - CH_2 - CH_2 - \overset{\bullet}{C}H_2 - S_4$ | 40,1 |
| V | $Si - O\overset{\bullet}{C}H_2 - CH_3$ | 57.3 |

Zuordnung der einzelnen Si 69-Signale

In diesem Beispiel läßt sich aus dem Verhältnis der Integration der Signale IV + V der Faktor für die nicht umgesetzten Alkoxygruppen des Silans ermitteln. In Beispiel 2 wird dieses Verhältnis an einem konkreten Fall bestimmt.

C) **Bestimmung des Reaktionsgrades Kieselsäure/Organosilan über die beim Mischen freiwerdende Ethanolmenge (in situ)**

Da es nicht möglich ist, die Umsetzung der Alkoxygruppen des Silans in einer kieselsäurehaltigen Gummimischung durch $^{13}$C-NMR-Festkörper-Spektroskopie zu ermitteln, ist es notwendig, eine andere Untersuchungsmethode einzusetzen.

Die in situ-Zugabe von Silan zu kieselsäurehaltigen Mischungen bewirkt eine Abspaltung von Alkohol während

7

des Mischverfahrens. Der Alkohol entweicht aus der Gummimischung in den Kneterschacht und weiter in das Kneterabsaugsystem. Mittels eines Meßrohrs über dem Kneterschacht ist es möglich, den aus der Reaktion Kieselsäure/Silan freiwerdenden Alkohol quantitativ zu bestimmen. Dies erfolgt durch Einsatz eines Flammenionisationsdetektors, bei dem folgende Meß- und Geräteparameter eingestellt werden. Die Messung erfolgt nach VDI 3481 Bl. 1.

| | |
|---|---|
| Analysator: | FID-Analysator RS 53 der Fa. Ratfisch |
| Eingestellter Meßbereich: | 0 - 100 (0-1000) ppm $C_1$ |
| Bestimmungsgrenze: | 0,1 % des eingestellten Meßbereichs |
| Entnahmesonde: Quarzwattefilter | Beheizte Leitung mit Teflonseele und |
| Registrierung der Meßwerte: | 2 Kanal Servogorschreiber RG 6 |

Aus dem Verhältnis der theoretisch möglichen freiwerdenden Ethanolmenge zur tatsächlich freiwerdenden Menge läßt sich ein Faktor für den nicht umgesetzten Anteil der Ethoxygruppen des Silans von

$$F = \frac{A - Z}{Z}$$

ermitteln.

A =    theoretisch mögliche freiwerdende Ethanolmenge

Z =    praktisch freigewordene Ethanolmenge

F =    Faktor für unumgesetzte Ethoxygruppen

**D) Bestimmung der Dispersion von Füllstoffen in Gummimischungen**

Die Ermittlung der Dispersion erfolgt mittels Rauhigkeitsmessung mit einem Gerät der Firma Federal, Dispersions-Analyse EM D-4000-W7.
Aus einer 2 mm-Vulkanisatplatte (Beispiel 3) wird mittels einer vom oben genannten Gerätehersteller mitgelieferten Schneideeinrichtung ein Gummistück (20 x 2 mm) abgeschnitten und in eine vorn Gerätehersteller vorgesehene Haltevorrichtung eingespannt. Mit Hilfe einer Diamantnadel wird die Oberfläche des Vulkanisates abgetastet und dabei die aufgrund der Dispersion hervorgerufene Oberflächenrauhigkeit ermittelt. Dieses Verfahren läßt eine quantitative Aussage über die Dispersion zu, indem vom Gerät eine Größe $F^2H$ ermittelt wird. F bedeutet hierbei die Anzahl der Peaks und H deren durchschnittliche Höhe. Die Dispersion des Füllstoffes in der Vulkanisatprobe ist dabei umso besser, je niedriger dieser Parameter ist.

**1. Vergleich der erfindungsgemäßen Verbindungen gegen *in situ* Silanzugabe und vormodifizierten Produkten gemäß EP 0 442 143 B1 und EP 0 177 674 B1**

| Rezeptur | 1 | 2 | 3 | 4 |
|---|---|---|---|---|
| Buna VSL 5025 1 HM | 96 | 96 | 96 | 96 |
| Buna CB 11S | 30 | 30 | 30 | 30 |
| Ultrasil 3370 GR | 80 | - | - | - |
| Mod. Produkte gemäß EP 0 177 674 B1 als | | | | |
| Granulat | - | 86,4 | - | - |
| Mod. Produkte gemäß EP 0 442 143 B1 als Granulat | - | - | 86,4 | - |
| Erfindungsgemäßes Produkt VTM 4 | - | - | - | 84,0 |
| Si 69 | 6,4 | - | - | - |
| ZnO RS | 3 | 3 | 3 | 3 |
| Stearinsäure | 2 | 2 | 2 | 2 |
| Protector G 35 | 1,0 | 1,0 | 1,0 | 1,0 |
| Naftolen ZD | 15 | 15 | 15 | 15 |

(fortgesetzt)

| Rezeptur | 1 | 2 | 3 | 4 |
|---|---|---|---|---|
| Vulkanox 4020 | 1,5 | 1,5 | 1,5 | 1,5 |
| Vulkacit D | 2 | 2 | 2 | 2 |
| Vulkacit CZ | 1,7 | 1,7 | 1,7 | 1,7 |
| Schwefel | 1,4 | 1,4 | 1,4 | 1,4 |

| Vulkanisationstemperatur: 165°C | 1 | 2 | 3 | 4 |
|---|---|---|---|---|
| $F_2H$ | 38707 | 48438 | 61197 | 29240 |
| Zugfestigkeit MPa | 13,3 | 15,9 | 14,9 | 15,6 |
| Modul 300 % MPa | 9,8 | 10,1 | 10,5 | 10,7 |
| Bruchdehnung % | 460 | 425 | 430 | 420 |
| Weiterreißwiderstand N/mm | 23 | 22 | 22 | 22 |
| Ball Rebound % | 35,9 | 30,7 | 33,4 | 39,5 |
| DIN-Abrieb $mm^3$ | 83 | 74 | 78 | 58 |
| Shore-Härte - | 67 | 69 | 69 | 74 |
| $\tan \delta$ (60 °C) | 0,133 | 0,142 | 0,130 | 0,104 |

**2. Bestimmung des Reaktionsgrades für Mischung Nr. 1 aus Beispiel 1**

In der Rezeptur 1, gemäß Beispiel 1, werden Kieselsäurefüllstoff und Si 69 gemäß nachstehender Mischanweisung zur Reaktion gebracht und der hierbei freiwerdende Ethanol mittels Flammenionisationsdetektors, wie unter Punkt C) beschrieben, während der ersten Mischstufe bestimmt.

Mischanweisung für Mischung Nr. 1 gemäß Beispiel 3:

| **Stufe 1:** | |
|---|---|
| Mischaggregat: | Werner und Pfleiderer, GKN 3,65 Liter |
| Friktion: | 1 : 1,11 |
| UPM: | 50 |
| Stempeldruck: | 5,5 bar |
| Leervolumen: | 3,65 L |
| Füllgrad: | 0,70 |
| Kühlmediumtemperatur: | 50 °C |
| 0' - 1' | Buna VSL 5025 1HM, Buna CB 11 S |
| 1' - 3' | Füllstoff, Si 69, ZnO, Stearinsäure, Naftolen ZD, Vulkanox 4020, Protector G35 |
| 3' | säubern |
| 3' - 5' | weitermischen |
| 5' | ausfahren |
| Batchausstoßtemperatur: | 162 °C |
| Zwischenlagerung: | 24 h/RT |

| **Stufe 2:** | |
|---|---|
| Mischaggregat: | Werner und Pfleiderer, GKN 3,65 Liter |
| Friktion: | 1 : 1,11 |
| UPM: | 30 |

(fortgesetzt)

| Stufe 2: | |
|---|---|
| Stempeldruck: | 5,5 bar |
| Leervolumen: | 3,65 L |
| Füllgrad: | 0,68 |
| Kühlmediumtemperatur: | 80 °C |
| 0' - 1,5' | Batch Stufe 1, Beschleuniger, Schwefel |
| 1,5' | ausfahren |
| Batchausstoßtemperatur: | 106 °C |
| Zwischenlagerung: | - |

Nach jedem Knetervorgang wurde der Batch wie folgt auf einer Walze bearbeitet:

3x links, 3x rechts einschneiden
3x eng, 3x weit stürzen
Fell ausziehen.

| Ergebnis: | |
|---|---|
| Theoretisch freiwerdende Ethanolmenge: | 42,5 g |
| Praktisch unter diesen Mischbedingungen freigewordene Ethanolmenge: | 15,25 g |

$$\Rightarrow \quad F = \frac{42,5 - 15,25}{15,25} = 1,8$$

Es läßt sich somit die Aussage treffen, daß sich unter obengenannten Bedingungen von den drei Ethoxygruppen der Triethoxysilylgruppe sich 1,8 nicht umgesetzt haben.

**3. Ermittlung des Reaktionsgrades (= unumgesetzte Ethoxygruppen) der verschiedenen Herstellverfahren**

**Produkte gemäß EP 0 442 143 B1, EP 0 177 674 B1 und erfindungsgemäßes Produkt VTM 4 mittels $^{13}$C-NMR-Festkörper-Spektroskopie**

a) Produkt gemäß EP 0 442 143 B1

$$\frac{\int CH_3\text{-}\overset{*}{C}H_2\text{-}O}{\int -\overset{*}{C}H_2\text{-}S} = 1,90$$

b) Produkt gemäß EP 0 177 674 B1

$$\frac{\int CH_3\text{-}\overset{*}{C}H_2\text{-}O}{\int -\overset{*}{C}H_2\text{-}S} = 1,16$$

c) Erfindungsgemäßes Produkt VTM4

$$\frac{\int CH_3-\overset{*}{C}H_2-O}{\int \overset{*}{C}H_2-S} = 0,35$$

|  | in situ gem. Beispiel 1 | EP 0 442 143 B1 gem. 2a) | EP 0 177 674 B1 gem. 2b) | VTM 4 gem. 2c) |
|---|---|---|---|---|
| Faktor für unumgesetzte Ethoxygruppen | 1,80 | 1,90 | 1,16 | 0,35 |

**4. Lagerstabilität der verschiedenen silanmodifizierten Produkte mittels $^{13}$C-NMR-Festkörper-Spektroskopie**

Der Verlauf des Faktors F während der Lagerung der mit Silan modifizierten Produkte ist aus anliegender Graphik ersichtlich.

Es ist zu ersehen, daß die Produkte gemäß EP 0 177 674 B1 bzw. EP 0 442 143 B1 Alkohol (Ethanol) während der Lagerung verlieren, wohingegen das erfindungsgemäße Produkt VTM3" wegen der Abwesenheit von Alkoxygruppen absolut stabil ist. Im Unterschied zu VTM4 wird hier auf eine Produkttemperatur von ca. 150 °C eingestellt.

## $^{13}$C-Festkörper-NMR-Spektroskopie

### Intensitätsverhältnis der Proben nach Lagerung

**Patentansprüche**

1. Staubarme, gut dispergierbare Granulate auf der Basis von mit Organosiliziumverbindungen der allgemeinen Formel

$$[R^1_n (R-(CH_2)_iO)_{3-n}Si-(CH_2)_y-(CH_2)_z]_q [B]$$

in der bedeuten:

| | |
|---|---|
| B: | -SCN,-SH, -Cl, -NH2 (wenn q = 1) oder -S$_x$- (wenn q = 2), |
| R und R$^1$: | eine Alkylgruppe mit 1 bis 4 Kohlenstoffatomen, wobei alle Reste R und R$^1$ jeweils die gleiche oder eine verschiedene Bedeutung haben können, |
| R: | zusätzlich H, |
| n: | 0; 1 oder 2, |
| y: | 0 bis 19, |
| z: | 1, |
| i: | 1, |
| x: | eine Zahl von 2 bis 8, |

modifizierten silikatischen durch Fällung hergestellten Füllstoffen, wobei der Grad der Umsetzung der Alkoxygruppen in Form des Integrationsverhältnisses der mittels $^{13}$C-NMR-Spektroskopie erhaltenen Signale angegeben wird und sich folgende Werte ergeben:

$$R \neq H: \frac{(CH_2)_i}{(CH_2)_z} \leq 0{,}4 \text{ für } q = 2, \leq 0{,}15 \text{ für } q = 1$$

$$R = H: \frac{R-(CH_2)_i}{(CH_2)_z} \leq 0{,}4 \text{ für } q = 2, \leq 0{,}15 \text{ für } q = 1$$

2. Granulate gemäß Anspruch 1,
   dadurch gekennzeichnet, daß sie als Basis gefällte Kieselsäure enthalten, und das Granulat nach der Modifizierung eine spez. Oberfläche (N$_2$,•BET)von 35 bis 400 m$^2$/g, insbesondere 100 bis 250 m$^2$/g, eine CTAB-Oberfläche von 35 bis 350 m$^2$/g, insbesondere von 100 bis 250 m$^2$/g sowie eine DBP-Zahl von 100 bis 300 ml/100 g, insbesondere von 150 bis 250 ml/100 g besitzt.

3. Granulate gemäß den Ansprüchen 1 und 2,
dadurch gekennzeichnet, daß sie aus kugelförmigen Teilchen bestehen.

4. Verfahren zur Herstellung von Granulaten gemäß den Ansprüchen 1 bis 3,
dadurch gekennzeichnet, daß es folgende Schritte umfaßt:

a) Herstellen einer wäßrigen Suspension des silikatischen Füllstoffs mit einem pH-Wert von 1 bis 5,
b) Einsprühen oder Eindüsen dieser Suspension und einer oder mehrere der Verbindungen gemäß Formel (I) in eine mit Heißluft erzeugte Wirbelschicht,
c) Abziehen des entstehenden, mit Organosilanverbindungen modifizierten Feuchtgranulats der gewünschten Korngröße,
d) Trocknen des Granulats, gegebenenfalls in verschiedenen Temperaturstufen,
e) gegebenenfalls Abscheiden der Feinanteile und deren Rückführen in die Wirbelschicht,
f) Anpassen des pH-Werts des Granulats auf einen Bereich von 5,5 bis 8,5, bevorzugt 6 bis 7,5.

5. Verfahren gemäß Anspruch 4,
dadurch gekennzeichnet, daß man unter Punkt a) wie folgt verfährt:
Herstellen einer wäßrigen Suspension des silikatischen Füllstoffs mit einem Feststoffgehalt von 17 bis 24 %, indem man den nach dem Fällprozeß und anschließendem Filtrierschritt erhaltenen Filterkuchen unter Zugabe von Schwefelsäure und Einsatz von Scherenergie verflüssigt.

6. Verfahren gemäß den Ansprüchen 4 und 5,
dadurch gekennzeichnet, daß man unter Punkt b) wie folgt verfährt:
Einsprühen oder Eindüsen dieser Suspension, in der zuvor eine oder mehrere der Verbindungen gemäß Formel (I) homogen verteilt wurden, über eine Mehrstoffdüse in eine mit Heißluft erzeugte Wirbelschicht.

7. Verfahren gemäß den Ansprüchen 4 bis 6,
dadurch gekennzeichnet, daß man der Suspension die Organosiliciumverbindungen in einer Menge von >0 bis 25 Gew.%, bezogen auf den Füllstoff, zusetzt.

8. Verfahren gemäß Anspruch 4,
dadurch gekennzeichnet, daß man Feuchtgranulat mit einem Wassergehalt von 55 bis 70 Gew.% austrägt, bezogen auf dessen Gesamtgewicht.

9. Verfahren gemäß den Ansprüchen 4 bis 7,
dadurch gekennzeichnet, daß man Suspensionen einer gefällten Kieselsäure einsetzt.

10. Verfahren gemäß den Ansprüchen 4 bis 7 und 9,
dadurch gekennzeichnet, daß man die Suspensionen aus Filterkuchen, die bei der Herstellung der gefällten Kieselsäure anfallen gewinnt, indem man diese mit verdünnter Schwefelsäure verflüssigt.

11. Verwendung von Granulaten gemäß den Ansprüchen 1 bis 3,
dadurch gekennzeichnet, daß man sie neben den weiteren üblichen Bestandteilen in vulkanisierbare Kautschukmischungen einarbeitet.

12. Vulkanisierte Kautschukmischungen,
dadurch gekennzeichnet, daß sie Granulate gemäß den Ansprüchen 1 bis 3 enthalten.

**Claims**

1. Low-dust, well dispersible granulates based on siliceous fillers manufactured by precipitation and modified with organosilicon compounds of the general formula

$$[R^1{}_n (R - (CH_2)_iO)_{3-n}Si - (CH_2)_y - (CH_2)_z]_q [B]$$

where

B:            - SCN, -SH, -C1, -NH$_2$ (when q = 1) or - S$_x$- (when q = 2),

R and R$^1$:       an alkyl group with 1 to 4 carbon atoms, wherein all groups R and R$^1$ may
have the same or a different meaning in each case,

R:            additionally H,

n:            0; 1 or 2,

y:            0 to 19.

z:            1,

i:            1,

x:            a number from 2 to 8.

wherein the degree of reaction of the alkoxy groups is given in the form of the integration ratio of the signals obtained by means of $^{13}$C-NMR-spectroscopy and the following values are produced:

$$R \neq H: \frac{(CH_2)_i}{(CH_2)_z} \leq 0.4 \text{ where } q = 2, \leq 0.15 \text{ where } q = 1$$

$$R = H: \frac{R\text{-}(CH_2)_i}{(CH_2)_z} \leq 0.4 \text{ where } q = 2, \leq 0.15 \text{ where } q = 1.$$

2. Granulates according to Claim 1,
characterized in that they contain precipitated silica as base, and after modification the granulate has a specific surface (N$_2$, •BET) from 35 to 400 m$^2$/g, particularly 100 to 250 m$^2$/g, a CTAB surface from 35 to 350 m$^2$/g, particularly 100 to 250 m$^2$/g, and a DBP number from 100 to 300 ml/100 g, particularly from 150 to 250 m1/100g.

3. Granulates according to Claims 1 and 2,
characterized in that they comprise spherical particles.

4. Process for manufacturing granulates according to Claims 1 to 3,
characterized in that it comprises the following steps:

     a) Manufacture of an aqueous suspension of the siliceous filler with a pH of 1 to 5,
     b) Spraying or nozzle-injecting this suspension and one or more of the compounds according to formula (I) into a fluidized bed produced with hot air,
     c) Removal of the arising moist granulate modified with organosilane compounds in the desired grain size,
     d) Drying of the granulate, optionally in different temperature stages,
     e) Optionally separating out the fine portions and returning them to the fluidized bed,
     f) Adapting the pH of the granulate to a range from 5.5 to 8.5, preferably 6 to 7.5.

5. Process according to Claim 4,
characterized in that the procedure under a) is as follows:
Manufacture of an aqueous suspension of the siliceous filler with a solids content from 17 to 24%, by liquefying the filter cake obtained after the precipitation process and subsequent filtration step by adding sulfuric acid and using shearing energy.

6. Process according to Claims 4 and 5,
characterized in that the procedure under b) is as follows:
Spraying or nozzle-injecting this suspension, in which one or more of the compounds according to formula (I) were previously homogeneously distributed, via a multi-component nozzle into a fluidized bed produced with hot air.

7. Process according to Claims 4 to 6,
characterized in that the organosilicon compounds are added to the suspension in a quantity from > 0 to 25 wt.%, related to the filler.

8. Process according to Claim 4,
characterized in that moist granulate with a water content from 55 to 70 wt.%, related to its total weight, is removed.

9. Process according to Claims 4 to 7,
characterized in that suspensions of a precipitated silica are used.

10. Process according to Claims 4 to 7 and 9,

characterized in that the suspensions are obtained from filter cakes which occur in the manufacture of the precipitated silica by liquefying them with dilute sulfuric acid.

**11.** Use of granulates according to Claims 1 to 3,
characterized in that they are incorporated into vulcanizable rubber mixtures in addition to the further conventional constituents.

**12.** Vulcanized rubber mixtures,
characterized in that they contain granulates according to Claims 1 to 3.

**Revendications**

**1.** Granulés exempts de poussière facilement dispersibles à base de substances de charge produites par précipitation, silicatées, modifiées par des composés d'organosilicium de formule générale :

$$[R^1{}_n(R\text{-}(CH_2)_iO)_{3-n}Si \text{ - } (CH_2)_y\text{-}(CH_2)_z]_q \text{ [B]} \tag{I}$$

dans laquelle on a comme signification :

B: -SCN, -SH, -Cl, -NH$_2$ (quand q = 1) ou -S$_x$- (quand q = 2).
R et R$^1$: un groupe alkyle ayant de 1 à 4 atomes de carbone pour lesquels tous les restes R et R$^1$ peuvent avoir la même signification ou une signification différente.
R: en supplément H,
n: 0; 1 ou 2,
y: de 0 à 19,
Z: 1,
i: 1,
x: un nombre allant de 2 à 8,

pour laquelle le degré de réaction des groupes alkoxy est indiqué sous la forme de leur rapport d'intégration des signaux obtenus à l'aide de spectroscopie [$^{13}$C]RMN et les valeurs suivantes s'élèvent à :

$$R \neq H: \frac{(CH_2)_i}{(CH_2)_z} \leq 0,4 \text{ pour q = 2}, \leq 0,15 \text{ pour q = 1}$$
$$R = H: \frac{R\text{-}(CH_2)_i}{(CH_2)_z} \leq 0,4 \text{ pour q = 2}, \leq 0,15 \text{ pour q =1}$$

**2.** Granulés selon la revendication 1,
caractérisés en ce qu'
ils contiennent comme base de l'acide silicique précipité et le granulé après la modification, possède une surface spécifique (N$_2$, BET) de 35 à 400 m$^2$/g, en particulier de 100 à 250 m$^2$/g, une surface CTAB de 35 à 350 m$^2$/g en particulier de 100 à 250 m$^2$/g ainsi qu'un indice DBP de 100 à 300 ml/100 g en particulier de 150 à 250 ml/100 g.

**3.** Granulés selon les revendications 1 et 2,
caractérisés en ce qu'
ils consistent en des particules sphériques.

**4.** Procédé de production de granulés selon les revendications 1 à 3,
caractérisé en ce qu'
il comprend les étapes suivantes :

a) production d'une suspension aqueuse de la substance de charge ayant une valeur de pH allant de 1 à 5,
b) pulvérisation ou injection de cette suspension et d'un ou plusieurs des composés conformément à la formule (I) dans un lit fluidisé obtenu avec de l'air chaud,
c) retrait du granulé humide modifié avec des composés d'organosilane, formé, de la taille de grains désirée,
d) séchage du granulé, le cas échéant à différentes étapes de température,

e) le cas échéant séparation des fractions fines et leur recyclage dans le lit fluidisé,

f) adaptation de la valeur du pH du granulé à une zone de 5,5 à 8,5, de préférence de 6 à 7,5.

**5.** Procédé selon la revendication 4,
caractérisé en ce qu'
on procède comme suit au point a) :
Préparation d'une suspension aqueuse de la substance de charge silicatée ayant une teneur en matières solides de 17 à 24 %, dans lequel on rend liquide le gâteau de filtre obtenu selon le processus de chute et ensuite après l'étape de filtration par addition d'acide sulfurique et mise en oeuvre d'énergie de cisaillement.

**6.** Procédé selon les revendications 4 et 5,
caractérisé en ce qu'
on procède au point b) comme suit :
pulvérisation ou injection de cette suspension, dans laquelle au préalable un ou plusieurs des composés selon la formule (I) ont été répartis d'une manière homogène par l'intermédiaire d'une buse à plusieurs substances dans un lit fluidisé obtenu avec de l'air chaud.

**7.** Procédé selon les revendications 4 à 6,
caractérisé en ce qu'
on ajoute à la suspension les composés d'organosilicium en une quantité allant de > 0 à 25 % en poids, rapporté à la substance de charge.

**8.** Procédé selon la revendication 4,
caractérisé en ce qu'
on décharge le granulé humide ayant une teneur en eau de 55 à 70 % en poids, rapporté à son poids total.

**9.** Procédé selon les revendications 4 à 7,
caractérisé en ce qu'
on met en oeuvre des suspensions d'un acide silicique précipité.

**10.** Procédé selon les revendications 4 à 7, et 9,
caractérisé en ce qu'
on produit les suspensions à partir de gâteaux de filtre, qui se forment au cours de la production de l'acide silicique précipité, dans lequel on rend liquides ceux-ci avec de l'acide sulfurique dilué.

**11.** Utilisation de granulés selon les revendications 1 à 3,
caractérisée en ce qu'
on les incorpore à côté des autres constituants habituels, dans des mélanges de caoutchouc vulcanisables.

**12.** Mélanges de caoutchouc vulcanisés,
caractérisés en ce qu'
ils renferment des granulés selon les revendications 1 à 3.